# EUROPÄISCHE PATENTANMELDUNG

(11) **EP 1 057 788 A2**
(43) Veröffentlichungstag der Anmeldung: **06.12.2000**
(21) Anmeldenummer: 00112098.9
(22) Anmeldetag: 05.06.2000
(51) Int. Cl.: C02F 11/00

(54) **Vorrichtung zur biologischen Umsetzung von organischen Abfällen zu einem erdähnlichen Endprodukt**

(30) Priorität: 04.06.1999 DE 29909785 U
(71) Anmelder: Berger, Wolfgang, Dipl.-Ing., 22769 Hamburg (DE)
(72) Erfinder: Berger, Wolfgang, Dipl.-Ing., 22769 Hamburg (DE)
(74) Vertreter: Patentanwälte Hauck, Graalfs, Wehnert, Döring, Siemons

(57) **Zusammenfassung**

Vorrichtung zur biologischen Umsetzung von organischen Abfällen mit einer Vorrottekammer zur Vorkompostierung der Abfälle, die unten durch einen gelochten Zwischenboden begrenzt ist und oberhalb des Zwischenboden einen Eingang für Abfälle und einen Luftdurchgang zur Umgebung aufweist, einer Nachrottekammer zur Nachkompostierung der Abfälle, die unten ebenfalls durch einen gelochten Zwischenboden begrenzt ist, oberhalb des Zwischenbodens einen Ausgang für nachkompostierte Abfälle und einen Luftdurchgang zur Umgebung aufweist, neben der Vorrottekammer angeordnet ist und von dieser durch eine Zwischenwand getrennt ist, die zum Befördern vorgerotteten Materials aus der Vorrottekammer in die Nachrottekammer offenbar ist und/oder mittels einer Fördereinrichtung überwindbar ist, einer unterhalb der gelochten Zwischenböden von Vorrottekammer und Nachrottekammer angeordneten Filterkammer, die eine Filterschicht für durch die Zwischenböden in die Filterkammer gesickerte Flüssigkeit enthält und die einen Austritt für Flüssigkeit aufweist, und einer Luftschicht zwischen der Filterschicht und den Zwischenböden für vom Luftdurchgang der Nachrottekammer zum Luftdurchgang der Vorrottekammer oder umgekehrt strömende Luft.

## Beschreibung

Die Erfindung bezieht sich auf eine Vorrichtung zur biologischen Umsetzung von organischen Abfällen zu einem erdähnlichen Endprodukt (Komposterde). Dieses kann dem Boden zur Bodenverbesserung und Düngung zugeführt werden. Das Haupteinsatzgebiet der Vorrichtung ist die Sammlung und Aufbereitung von menschlichen Toilettenabfällen. Darüber hinaus ist eine teilweise oder ausschließliche Beschickung mit sonstigen organischen Abfällen (z.B. aus Haushalt, Garten o.ä.) möglich.

Bereits bekannte Kompostanlagen, die auch als Toilettensystem nutzbar sind, unterscheiden sich hauptsächlich durch die Einteilung in Einkammer- und Mehrkammersysteme.

Einkammersysteme sind dadurch gekennzeichnet, daß eine Vor- und eine Nachrotte in einer einzigen Kammer vertikal übereinander angeordnet sind. Bekannt sind dabei im wesentlichen Systeme mit schräg gestelltem Boden zur Drainage und zur Beförderung der Kompostmasse zur Entnahme (Rutscheffekt). Beide Intentionen haben sich in der Praxis aus den folgenden Gründen nicht bewährt:

Durch den Kontakt von Flüssigstoffen mit festen Abfallstoffen können nämlich Krankheitskeime zum Entnahmematerial transportiert werden (auch bei Systemen ohne schrägen Boden). Außerdem ist die Abfallmasse in der Regel so kompakt, daß sich ein Rutscheffekt nicht einstellt. Des weiteren geht durch die Schrägstellung des Bodens nutzbares Volumen verloren. Schließlich können bei der Entnahme nicht ausreichend kompostierte Stoffe mit entnommen werden (gilt auch für Systeme ohne schrägen Boden).

Mehrkammersysteme sind als drehbare Behälter oder in der Ausführung mit hintereinanderliegenden Schubladen bekannt. Auch können auswechselbare (z.B. fahrbare) Behälter als Mehrkammersystem genutzt werden. Nach dem Füllen einer Kammer wird der Behälter zur nächsten Kammer gedreht bzw. wird die Schublade oder der Behälter ausgewechselt und zur Nachrotte abgestellt. Dabei ergeben sich folgende Probleme:

Zunächst ist der Füllgrad der einzelnen Kammer geringer als bei Einkammersystemen, so daß ein erhöhter Kontrollaufwand erforderlich ist. Des weiteren müssen drehbare Behälter genau einjustiert werden und sind überdies schwer zu bewegen. Schubladen und auswechselbare Behälter sind ebenfalls schwer zu transportieren. Nachteilig ist auch, daß das aufgeteilte Kompostvolumen einem gemeinsamen Kompostierungsprozeß verlorengeht, so daß ein Austausch von Organismen und Nährstoffen nicht stattfinden kann. Das für Selbsterhitzungsprozesse notwendige Volumen wird im Regelfalle nicht erreicht.

Davon ausgehend liegt der Erfindung die Aufgabe zugrunde, eine Vorrichtung der eingangs genannten Art zu schaffen, die günstigere Bedingungen für den biologischen Abbauprozeß, sowie auch eine weitestgehende Hygienisierung der Abfallstoffe erreicht und die vorteilhaft Installations-, Wartungs- und Entleerungseigenschaften aufweist.

Die Aufgabe wird durch eine Vorrichtung mit den Merkmalen des Anspruches 1 gelöst. Vorteilhafte Ausgestaltungen der Vorrichtung sind in den Unteransprüchen angegeben.

Die erfindungsgemäße Vorrichtung zur biologischen Umsetzung von organischen Abfällen zu einem erdähnlichen Endprodukt hat
- eine Vorrottekammer zur Sammlung und Vorkompostierung der Abfälle, die unten durch einen gelochten Zwischenboden begrenzt ist und oberhalb des Zwischenbodens mindestens einen Eingang für Abfälle und einen Luftdurchgang zur Umgebung aufweist,
- eine Nachrottekammer zur Nachkompostierung der vorkompostierten Abfälle, die unten ebenfalls durch einen gelochten Zwischenboden begrenzt ist, oberhalb des Zwischenbodens einen Ausgang für nachkompostierte Abfälle und einen Luftdurchgang zur Umgebung aufweist, neben der Vorrottekammer angeordnet ist und von dieser durch eine Zwischenwand getrennt ist, die zum Befördern vorgerotteten Materials aus der Vorrottekammer in die Nachrottekammer zumindest teilweise öffenbar ist und/oder mittels einer Fördereinrichtung überwindbar ist,
- eine unterhalb der gelochten Zwischenböden von Vorrottekammer und Nachrottekammer angeordnete Filterkammer, die eine Filterschicht für durch die Zwischenböden in die Filterkammer gelangte Flüssigkeit enthält, und die einen Austritt für Flüssigkeit aufweist,
- eine Luftschicht zwischen der Filterschicht und den Zwischenböden für vom Luftdurchgang der Nachrottekammer zum Luftdurchgang der Vorrottekammer oder umgekehrt strömende Luft.

Zu den Vorrichtungsteilen, deren zweckmäßiger Ausgestaltung und Funktion wird folgendes angemerkt:

Die Vorrichtung weist grundsätzlich drei Kammern auf, nämlich eine Vorrottekammer und eine Nachrottekammer zur Sammlung und Aufbereitung organischer Feststoffe und eine Filterkammer zur Sammlung und Filtrierung von organischen Flüssigstoffen (z.B. Urin, Kompostsickerwasser o.ä.)

Die Vorrottekammer dient der Sammlung und Vorkompostierung der Abfallstoffe. Sie kann eine Deckwand mit einer insbesondere waagerechten Installationsfläche für mindestens einen Toilettensitz und/oder für mindestens einen Rohranschluß für einen Toilettenstuhl und/oder für mindestens einen Abwurf für organische Abfälle und/oder Zuschlagstoffe sowie mindestens einen Rohranschluß für Abluft aufweisen. Ein Abwurf kann einfach als verschließbare Öffnung ausgeführt sein. Er kann aber auch eine Vorrichtung zum Einschleusen und/oder zum Verteilen des abzuwerfenden Materials in der Vorrottekammer aufweisen.

Vorzugsweise wird die Vorrottekammer vor der Inbetriebnahme mit einem Filterbett aus Erde. Torf, Baumrinde o.ä. beschickt und mit Kompostorganismen und Bodentieren angeimpft. Abfälle können der Vorrottekammer insbesondere aus einer Trockentoilette, aus einer Urin separierenden Toilette, aus dem Feststoffausgang eines an einer Wasserspültoilette angeschlossenen Wasserabscheiders bzw. aus dem Abwurf für organische Abfälle (aus Küche oder Garten) zugeführt werden. Für Wartungszwecke, aber auch für die Zufuhr von Abfällen, kann die Vorrottekammer beispielsweise an der Frontseite mit einer Inspektionsluke ausgestattet sein. Die Oberfläche der Abfallmasse kann in Zeitabständen durch die Inspektionsluke oder durch die Toilette bzw. den Abwurf mit Zuschlagstoffen eingestreut werden.

Die Nachrottekammer ist neben der Vorrottekammer angeordnet und von dieser durch eine Zwischenwand getrennt, die beispielsweise als Schieber ausgeführt sein kann.

Vorgerottetes Material wird zur Nachrotte aus der Vorrottekammer in die Nachrottekammer befördert. Dies kann beispielsweise mit Hilfe eines Rechens oder mit Hilfe eines Belüftungsstabes (z.B. mit Widerhakeneffekt) geschehen, der beispielsweise durch den Schieber eingeführt werden kann. Auch ist der Einsatz einer Förderschnecke o.ä. Misch- und/oder Fördervorrichtungen möglich. Dabei kann die Förderschnecke im wesentlichen horizontal an der Vorrottekammer durch oder in eine Öffnung der Zwischenwand zur Nachrottekammer geführt sein. Vorzugsweise wird erst wenn die Kapazität der Vorrottekammer erreicht ist, das Material aus der Nachrottekammer zur Verwertung entnommen, um Platz für die Überführung vorgerotteten Materials in die Nachrottekammer zu schaffen. Dazu kann die Nachrottekammer wenigstens eine Entnahmeklappe aufweisen, die an der Vorderseite und/oder an der Oberseite derselben angeordnet sein kann.

Auch kann die Vorrichtung mit einer abkoppelbaren Nachrottekammer ausgeführt sein. Das ist insbesondere zum Abtransport des in der Nachrottekammer befindlichen Materials und/oder zu Revisionszwecken nutzbar. Auch ist ein Austausch von Nachrottekammern (z.B. in einem Mehrwegesystem) möglich, ohne in Kontakt mit dem Kompost zu kommen.

Der mindestens eine Zwischenboden kann insbesondere horizontal ausgerichtet sein. Er kann aber auch - insbesondere in der Vorrottekammer - eine Neigung zur Horizontalen haben, um eine Bewegung der Abfälle nach vorn - insbesondere zur Nachrottekammer - zu unterstützen.

Zusätzlich oder anstatt der oben erwähnten Misch- und/oder Fördervorrichtung kann in der Vorrottekammer und/oder in der Nachrottekammer mindestens eine Misch- und/oder Fördervorrichtung vorhanden sein. Vorzugsweise nimmt mindestens eine Misch- und/oder Fördervorrichtung den Querschnitt der Vorrottekammer im wesentlichen ein, um im Ruhezustand die darüber befindlichen Abfälle zurückzuhalten und bei Betätigung die Abfälle zu durchmischen, zu lockern bzw. zum Zwischenboden hin zu befördern. Diese Misch- und/oder Fördervorrichtung kann insbesondere verhindern, daß bei der Entnahme zur Nachrottekammer frisches Abfallmaterial nachrutscht und sogleich der Nachrottekammer zugeführt wird. Ferner begünstigt die Misch- und/oder Fördervorrichtung eine Revision der Filterkammer und darin befindlichen Filterschicht, die sich in dem Raum unterhalb der Misch- und/oder Fördervorrichtung befinden. Hierzu kann mindestens ein Zwischenboden herausnehmbar ausgeführt sein, wobei die Anlage grundsätzlich weiterbenutzbar ist. Darüber hinaus können durch Betätigung der Misch- und/oder Fördervorrichtung Schüttkegel ausgeglichen werden, die sich bei Aufgabe der Abfälle bilden.

Vorzugsweise wird die Misch- und/oder Fördervorrichtung von einem oder mehreren Rührwerken oder Förderschnecken oder ähnlichem mit horizontaler oder vertikaler Achse gebildet. Rührwerke können so angeordnet sein, daß sie mit Rührorganen (z.B. Paddel) ineinandergreifen, um den Querschnitt der Nachrottekammer weitgehend zu versperren. Die Rührwerksorgane können so ausgeführt sein, daß sie das Abfallmaterial in einer gewünschten Richtung fördern.

Unterhalb der Vorrottekammer und der Nachrottekammer befindet sich die Filterkammer, die eine verhältnismäßig flache Kammer sein kann. Die Filterkammer ist durch einen perforierten Zwischenboden von der Vorrottekammer und der Nachrottekammer getrennt. Dieser kann als abnehmbarer Deckel ausgeführt sein. Die Filterkammer ist teilweise mit einer Filterschicht gefüllt, die aus Baumrinde oder aus einem mineralischen Filterstoff (z.B. Kiesel) oder aus einem Gemisch von beiden o.ä. bestehen kann.

Die Filterkammer selbst kann durch senkrechte Wände mit Durchgangslöchern oder zugeordneten Überlaufvorrichtungen (z. B. Überlaufwehre oder Überlaufrohre) in Abschnitte unterteilt sein, so daß eine schrittweise Reinigung möglich ist. Vorzugsweise hat die Filterkammer einen Überlauf der mit einem Flüssigkeitsaustritt verbunden ist, um ein gleichbleibendes Flüssigkeitsniveau in der Filterkammer zu halten. Der Flüssigkeitsaustritt kann sich an einer hinter dem Überlauf angeordneten Sammelkammer befinden. Er kann mit einem Speicher, einer Abwasseranlage oder einem Sterilisator zur direkten Einleitung in den Boden oder in ein Gewässer verbunden sein.

Auch ist der Anschluß einer schwimmergesteuerten Pumpe oder einer Bilgepumpe an die Filterkammer möglich, um eine Entleerung und gegebenenfalls die Einhaltung eines gleichbleibenden Flüssigkeitsniveaus zu bewerkstelligen.

Vorzugsweise wird ein Überschreiten eines maximalen Niveaus durch eine mit einem Niveaufühler verbundene Alarmvorrichtung oder durch eine andere Kontrolleinrichtung angezeigt.

Zwischen dem Zwischenboden und der Filterschicht befindet sich eine Luftschicht, die lüftungstechnisch mit einem Zu- und einem Abluftdurchgang der Anlage verbunden ist. Lüftungskanäle können die Zu- und die Abluft von Lichtdurchgängen im Oberbereich von Nachrottekammer und Vorrottekammer zur Luftschicht und von dieser weg führen. Die Lüftungskanäle können in den Ecken der drei Kammern angeordnete Luftschächte sein. Diese können dreiecksförmige Querschnitte aufweisen, wobei die beiden Schenkel des dreiecksförmigen Querschnittes von Kammerwänden und die Basis des dreiecksförmigen Querschnittes von einer zusätzlichen Wand gebildet werden kann.

Vorzugsweise wird die Flüssigkeit aus einer Urin separierenden Toilette und/oder Abwasser anderer Herkunft durch mindestens eine Abwasserleitung ohne in Kontakt mit den Abfällen in der Vorrottekammer zu kommen der Filterkammer zugeführt, wodurch eine Durchnässung der Abfälle vermieden wird. Die Leitung kann als Schlauch oder Rohr oder Kanal ausgeführt sein. Sie kann insbesondere in die Lüftungskanäle integriert sein.

Die Zuluftmenge kann über ein einstellbares Tellerventil einstellbar sein. Die Abluft kann durch einen Luftdurchgang auf der Installationsfläche über ein Dach abgeführt sein. Dabei kann die Abluftführung so ausgestaltet sein, daß eine weitgehende Ausnutzung des Kamineffektes stattfindet.

Zur Sicherung eines Geruchsverschlusses kann in der Abluftführung ein Ventilator installiert sein. Dieser kann insbesondere solar- und/oder windbetrieben ausgeführt werden. Bei tieferen Zulufttemperatur kann die Luft durch Wärmeaustauscher aufgeheizt dem Prozeß zugeführt werden, wobei die Wärmeaustauscher beispielsweise in der Filterkammer installiert sein können. Die Wärmeaustauscher können zu Heizvorrichtungen, solaren Warmluftkollektoren o.ä. gehören. Auch kann die Vorrichtung zumindest teilweise absorbierend und/oder wärmeleitend ausgeführt sein, um durch Wärmestrahlung und/oder Konvektion und/oder Wärmeleitung Wärme aufzunehmen. Dabei kann es sich beispielsweise um Strahlungs- oder Konvektionswärme aus der Umgebung (Sonneneinstrahlung) oder um Erdwärme handeln, wenn die Vorrichtung zumindest teilweise in das Erdreich eingebaut wird. Über Mannlöcher kann dann eine Inspektion der Vorrichtung ermöglicht werden.

Um die entstehende Prozeßwärme möglichst lange zu halten, kann die Anlage mindestens teilweise wärmeisoliert sein (z.B. mittels einer druckfesten Wärmedämmung). Die Wärmedämmung kann nach außen durch Platten geschützt werden.

Die Vorrichtung kann als Modul ausgeführt sein, dessen Breite und Höhe innerhalb eines Rasters unterschiedlich gewählt sein kann, um dem Kapazitätsbedarf bzw. den baulichen Voraussetzungen zu entsprechen. Die Installationsfläche kann so bemessen sein, daß neben dem Anschluß von Fallrohren aus z.B. Toiletten in mehreren Stockwerken (z.B. im Wohnungsbau) auch eine direkte Sitzmöglichkeit auf der Installationsfläche gegeben ist, um einfache Lösungen für Gemeinschaftstoilettenanlagen zu ermöglichen. Dazu kann einer oder können mehrere Toilettensitze direkt auf der Installationsfläche angebracht werden. Zur besseren Reinigung und als Sichtschutz können diese über einen trichterförmigen Einsatz mit der Vorrottekammer verbunden sein. Dieser Einsatz kann auch eine Urintrennung aufweisen, die den Urin über ein Rohr bzw. Kanäle (beispielsweise die Lüftungskanäle) durch die Vorrottekammer in die Filterkammer leitet. Hierdurch wird eine Vernässung der Kompostmasse verhindert.

Weitere Wirkungen und Vorteile der Erfindung werden nachfolgend erläutert:

Durch die Anordnung und Ausbildung der Kammern und Vorrichtungsteile werden die notwendigen Bedingungen für den biologischen Abbauprozeß wie auch für eine weitestgehende Hygienisierung der Abfallstoffe erreicht. Die Anlage kann unterirdisch, im Keller oder ebenerdig installiert werden. Auch ist eine Installation halb im Haus, halb außerhäusig möglich. Hierdurch ist die Möglichkeit gegeben, die Anschlüsse innen zu installieren und die Wartung und Entnahme von außen durchzuführen.

Bei dem erfindungsgemäßen Mehrkammersystem ist eine Durchmischung von fertig kompostiertem Material weder über Flüssigkeit, die in Kontakt mit frischen Abfällen gekommen ist, noch über unzureichend kompostiertes Material selbst möglich. Dabei ist das erforderliche Kompostvolumen für eine einwandfreie Kompostierung nicht erheblich reduziert. Dies hat zur Folge, daß sich der Kompostierungsprozeß nachhaltiger und vollständiger vollziehen kann und eine für die Hygienisierung notwendige Selbsterhitzung der Kompostmasse gefördert wird. Zusammen mit der Trennung von Nachrotte, Vorrotte und Sickerwasserspeicherung sind somit die Voraussetzungen für eine hygienisch einwandfreie Umsetzung gegeben. Bekannte Systeme haben hingegen entweder nur eine Rottekammer mit Sickerwasserspeicher (Einkammersysteme, siehe oben) oder ein unzureichendes Volumen zur Selbsterhitzung (Mehrkammersysteme, siehe oben).

Die Filterkammer ist ein Speichervolumen für Flüssigstoffe, in der die Sickerwässer vorgereinigt und filtriert werden, so daß Fäulnisprozesse absorbiert werden. Gleichzeitig sorgt die darüberliegende Luftschicht für eine ständige Sauerstoffversorgung, um luftatmende Organismen bei der biologischen Umsetzung zu fördern und Feuchtigkeit als Wasserdampf aufzunehmen und über das Lüftungssystem abzuführen. Bekannte Systeme haben zwar ebenfalls einen direkten Kontakt des Sickerwassers mit dem Luftstrom, besitzen jedoch keine Filter- und Speicherwirkung.

Eine Durchmischung in der Vorrottekammer, wie auch der Transport der Abfälle von der Vorrottekammer in die Nachrottekammer, kann mit einem Belüftungsstab oder Rechen manuell erfolgen. Dies wird durch eine Misch- und/oder Fördervorrichtung (Rührwerk und Förderschnecke oder Rühr- und Förderschnecke) erleichtert, so daß auch die Kontaktmöglichkeit mit den Abfallstoffen bei Wartungsarbeiten erheblich reduziert wird. Die Misch- und/oder Fördervorrichtung kann manuell oder motorisch angetrieben werden. Bekannte Systeme verwenden Rührwerke mit vertikaler oder horizontaler Achse, die vorrangig der Durchmischung dienen (Einkammersysteme, siehe oben), dadurch jedoch die Gefahr bieten, daß bei der Entnahme unzureichend kompostiertes Material entnommen wird.

Die Vorrichtung kann direkt durch Anbringung von Toilettensitzen auf einer Installationsfläche benutzt werden. Dies ist besonders vorteilhaft bei Gebäuden ohne Keller mit felsigem Untergrund. Weiterhin ist die Anlage so konzipiert, daß die Entnahme außerhalb des Gebäudes erfolgen kann, während sich im Gebäude der Toilettensitz befindet. Dabei ist der Vorrotteraum im Gebäude und der Nachrotteraum, der keine höheren Temperaturen benötigt, außerhalb des Gebäudes angeordnet. Somit können auch einzelne Toilettenanlagen in separaten Gebäuden (Toilettenhäuser in Wander- und Freizeitgebieten, Baustellen u.ä.) installiert werden. Bekannte Systeme haben zumindest zur Hälfte den Vorrotteraum außerhalb des Gebäudes, so daß unterschiedliche Bedingungen für den Rotteprozeß entstehen.

Die Dimensionierung der Installationsfläche kann so sein, daß mehrere Anschlüsse, auch aus benachbarten Räumen, möglich sind. So können je nach Installationsflächengröße zwei bzw. bis zu vier Toilettensitze bei Rücken- an Rücken-Position angeschlossen werden (erforderlich z.B. bei räumlicher Trennung von männlichen und weiblichen Benutzern). Unterschiedliche Breiten der Vorrichtung ermöglichen z.B. im Geschoßwohnungsbau eine leichtere Zuordnung separater Vorrichtungen zu den anzuschließenden Wohneinheiten, so daß der ungünstige Anschluß mehrerer Wohneinheiten an eine Anlage vermieden werden kann. Bekannte Systeme haben hingegen maximal zwei Anschlußmöglichkeiten, wobei unterschiedliche Behältergrößen nicht modular aufeinander abgestimmt sind.

Die Erfindung wird nachfolgend anhand der anliegenden Zeichnungen von Ausführungsbeispielen der Vorrichtung näher erläutert. In den Zeichnungen zeigen:
Fig. 1 eine Vorrichtung im Vertikalschnitt;
Fig. 2 dieselbe Vorrichtung in einem Horizontalschnitt oberhalb der Förderschnecke;
Fig. 3 eine Vorrichtung angeordnet in einem Gebäude;
Fig. 4 eine Vorrichtung mit zwei Toilettensitzen in der Draufsicht;
Fig. 5 eine Vorrichtung mit vier Toilettensitzen in der Draufsicht;
Fig. 6 Anordnung aus mehreren Vorrichtungen mit teilweise unterschiedlicher Breite der Draufsicht.

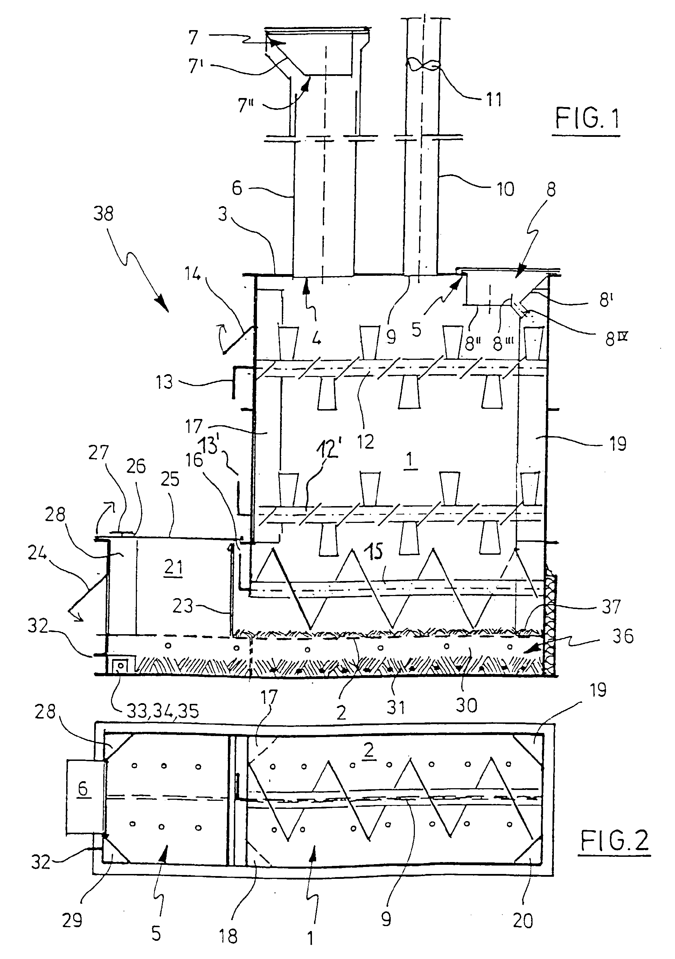

Gemäß Fig. 1 hat die Vorrichtung eine kastenförmige Vorrottekammer 1, die unten von einem gelochten, horizontalen Zwischenboden 2 begrenzt ist. In einer Deckwand 3 befinden sich Eingänge 4, 5 für Abfälle. Der Eingang 4 ist über einen Schacht 6 mit einem höher gelegenen Toilettensitz 7 verbunden. In dem Eingang 5 ist direkt ein Toilettensitz 8 plaziert, der auf der Deckwand 3 installiert ist.

Die Toilettensitze 7, 8 haben eine sich nach unten verjüngende Schale 7', 8' mit einer Öffnung 7", 8" am unteren Ende. Allerdings hat die geneigte Wand der Schale 8' am unteren Ende eine Rückhalteplatte 8"' für eine Urintrennung, der ein Urinablauf 8^{IV} vorgeordnet ist.

Außerdem hat die Deckwand 3 einen Luftdurchgang 9, an dem ein zur Umgebung führendes Abluftrohr 10 mit einem integrierten Abluftventilator 11 angeschlossen ist.

Im Oberbereich der Vorrottekammer 1 sitzt ein Misch- und Förderorgan 12. Dieses hat eine in Längsrichtung der Vorrottekammer 1 erstreckte Rührwelle mit einer Vielzahl von Rührblättern, die darauf axial verteilt angeordnet sind ("Paddelrührer"). Dieses Misch- und Förderorgan 12 ist mit einer Handkurbel 13 verbunden, die auf der Vorderseite der Vorrottekammer 1 heraussteht und von außen betätigbar ist.

Oberhalb der Handkurbel 13 ist in der vorderen Seite der Vorrottekammer 1 eine Inspektionsluke 14 vorhanden.

In der Fig. 1 ist dasselbe Misch- und Förderorgan 12' in einer tieferen Position innerhalb der Vorrottekammer 1 dargestellt. An dieser Position soll das Misch- und Förderorgan 12' insbesondere verhindern, daß Abfälle nachrutschen, wenn es nicht betätigt wird. Bei Betätigung des Misch- und Förderorgans 12' wird eine Durchmischung der Abfälle, deren Belüftung und deren Förderung nach unten bewirkt.

Ferner befindet sich in der Vorrottekammer 1 direkt oberhalb des Siebbodens 2 eine Förderschnecke 15, die unmittelbar oberhalb des Zwischenbodens 2 angeordnet ist. Diese erstreckt sich ebenfalls in Längsrichtung der Vorrottekammer 1 über deren gesamte Tiefe. Sie hat an einem Ende eine Antriebseinrichtung 16. Wenn diese - wie gezeichnet - am vorderen Ende vorhanden ist, kann es sich dabei um ein nach oben führendes Zugmittelgetriebe handeln, das wiederum von außen mittels einer Kurbel betätigbar ist. Dabei kann es sich aber auch um eine hinten aus der Vorrottekammer 1 herausgeführte, direkt mit der Schnecke 15 verbundene Handkurbel handeln.

In den vier Ecken der Vorrottekammer 1 sind durch zusätzliche plattenförmige Wände abgetrennte Lüftungskanäle 17 bis 20 mit jeweils dreieckigem Querschnitt vorhanden, die jeweils eine obere und eine untere Öffnung haben. Die obere Öffnung sämtlicher Lüftungskanäle 17 bis 20 befindet sich im Oberbereich der Vorrottekammer 1 und die untere Öffnung der Kanäle 17, 18 etwas oberhalb der Förderschnecke 15 und der Kanäle 19, 20 etwas unterhalb des Zwischenbodens 2.

Vor der Vorrottekammer 1 ist eine ebenfalls kastenförmige Nachrottekammer 21 angeordnet, die unten ebenfalls von dem Siebboden 2 begrenzt ist, der sich über die Vorrottekammer 1 und die Nachrottekammer 21 erstreckt. Die Nachrottekammer 21 hat eine deutlich geringere Höhe als die Vorrottekammer 1, jedoch dieselbe Breite. Auch die Tiefe der Nachrottekammer 21 ist geringer als die der Vorrottekammer 1.

Die Nachrottekammer 21 ist von der Vorrottekammer 1 durch eine Zwischenwand 23 getrennt, die als Schieber ausgeführt ist, um vorgerottete Abfälle aus der Vorrottekammer 1 in die Nachrottekammer 21 zu überführen.

Vorn hat die Nachrottekammer 21 eine Entnahmeklappe 24 für nachgerottetes Material. Eine Deckwand 25 der Nachrottekammer 21 ist insgesamt hochklappbar zu Wartungs- und Revisionszwecken und für ein Betätigen des Schiebers 23 und ggf. der Förderschnecke 15.

In der Deckwand 25 befindet sich ein Luftdurchgang 26, der die Nachrottekammer 21 mit der Umgebung verbindet, und im Luftdurchgang 26 sitzt ein einstellbares Ventil 27.

In den vorderen Ecken der Nachrottekammer 21 sind Luftkanäle 28, 29 vorhanden, die ebenfalls einen kreisförmigen Querschnitt haben. Diese erstrecken sich vom Oberbereich der Nachrottekammer 21 bis zum Zwischenboden 2.

Unterhalb des durchgehenden Zwischenbodens 2 ist eine ebenfalls rechteckige, jedoch verhältnismäßig flache Filterkammer 30 vorhanden. Diese ist etwa bis zur Hälfte ihrer Höhe mit einer Filterschicht 31 gefüllt. Vorn hat sie einen Austritt 32 für Flüssigkeit. Im Inneren der Filterkammer 30 sitzt vorn eine Bilgepumpe 33, ein Niveaufühler 34 und eine damit verbundene Alarmvorrichtung 35.

Zwischen Filterschicht 31 und Zwischenboden 2 befindet sich in der Filterkammer 30 eine Luftschicht 36. Diese ist vorn über die Luftkanäle 28, 29 mit dem Luftdurchgang 26 verbunden und zumindest hinten über die Luftkanäle 19, 20 mit dem Oberbereich der Vorrottekammer 1 und damit mit dem Luftdurchgang 9. Dabei versteht sich, daß die Luftkanäle 28, 29, 19, 20 im Bereich von Löchern des Zwischenbodens 2 enden oder gar durch Aussparungen des Siebbodens 2 bis in die Luftschicht 36 hineinragen.

Somit bildet sich bei Betrieb des Abluftventils 11 ein Unterdruck in der Vorrottekammer 1 aus, der für eine Luftströmung vom Luftdurchgang 26 über die Luftschicht 36 bis zum Luftdurchgang 9 sorgt und einen Geruchsverschluß bewirkt. Dabei versteht sich, daß die Toilettensitze 7, 8 im wesentlichen luftdicht abschließende Deckel aufweisen.

Vor Inbetriebnahme wird die Filterkammer 30 mit einer Filterschicht 31 gefüllt, die lediglich im Abstand von mehreren Jahren gewechselt werden muß. Außerdem wird in die Vorrottekammer 1 zunächst ein Filterbett 37 aus organischem Material eingebracht, und diese bzw. durch die Toilettensitze 7, 8 eingetragenen Abfälle werden zudem mit Kompostorganismen und/oder Bodentieren angeimpft. Von Zeit zu Zeit werden den Abfällen in der Vorrottekammer 1 überdies Zuschlagstoffe zugeführt.

Ferner wird von zeit zu Zeit die Mischeinrichtung 12 betätigt, um die Vorkompostierung zu unterstützen. Urin gelangt durch die Urintrennung 8^{IV} und den Lüftungskanal 19 direkt in die Filterkammer 30. Aus der Vorrottekammer 1 sickert Flüssigkeit nach unten und gelangt durch den Zwischenboden 2 ebenfalls in die Filterkammer 30. Dort wird die Flüssigkeit vorbereitet und filtriert und mit der Filterschicht 31 zu einem erdähnlichen Material umgesetzt. Dieses wird durch den durch die Luftschicht 36 zugeführten Sauerstoff unterstützt. Der Flüssigkeitsüberlauf wird durch die Bilgepumpe 33 verhindert.

Von Zeit zu Zeit wird der Schieber 23 geöffnet und mittels der Förderschnecke 15 vorgerottetes Material in die Nachrottekammer 21 gefüllt, wo Restflüssigkeit durch den Zwischenboden 2 sickern kann. Das nachgerottete Material wird durch die Entnahmeklappe 24 entnommen.

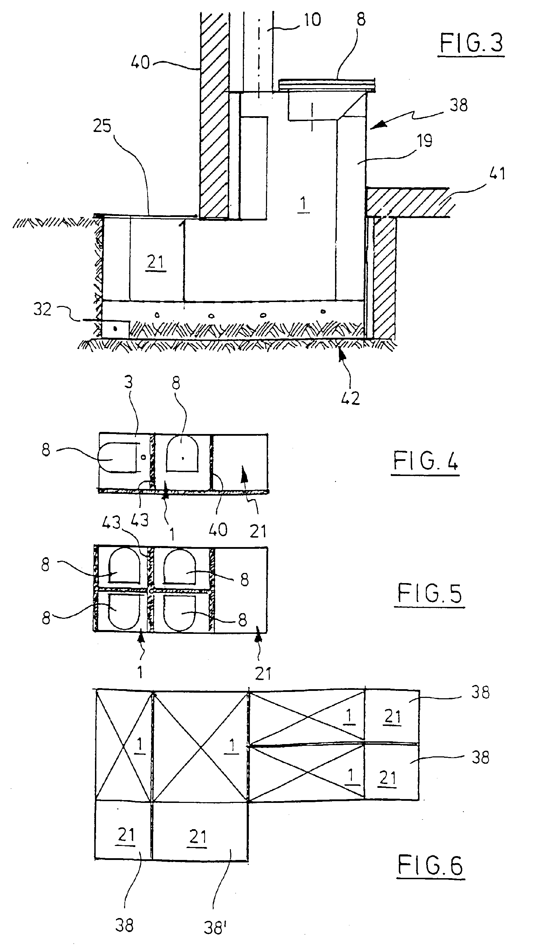

Gemäß Fig. 3 kann eine solche Vorrichtung 38 in einem Gebäude 39 unmittelbar neben einer Außenwand 40 eingebaut werden. Die Vorrottekammer 1 und ein darauf angeordneter Toilettensitz 8 befinden sich dann praktisch vollständig innerhalb des Gebäudes. Der Verbindungsbereich zur Nachrottekammer 21 bzw. die Nachrottekammer selbst sind außerhalb des Gebäudes angeordnet, und zwar unterhalb der Flurehene 41. Insofern ist ggf. ein Bodenaushub bei 42 erforderlich.

Im gezeigten Fall wird das nachgerottete Material aus der Nachrottekammer 21 durch Öffnen der hochklappbaren Deckwand 25 entnommen. Der Austritt 32 für Flüssigkeit ist an die Kanalisation angeschlossen.

Das Abluftrohr 10 wird über das Dach geführt.

Gemäß Fig. 4 können lauf der Deckwand 3 der Vorrottekammer 1 zwei Toilettensitze 8 plaziert sein, wobei beiderseits eine Trennwand vorgesehen sein kann.

Gemäß Fig. 5 sind vier Toilettensitze 8 auf der Vorrottekammer angeordnet, und zwar in zwei Paaren in Rücken-an-Rücken-Anordnung. Dazwischen sind gebäudeseits Trennwände 43 vorhanden.

Fig. 6 zeigt eine größere Installation aus vier Vorrichtungen 38, 38', wobei drei Vorrichtungen geringerer Breite und eine Vorrichtung größerer Breite vorhanden sind.

## Patentansprüche

1. Vorrichtung zur biologischen Umsetzung von organischen Abfällen zu einem erdähnlichen Endprodukt mit
- einer Vorrottekammer zur Sammlung und Vorkompostierung der Abfälle, die unten durch einen gelochten Zwischenboden begrenzt ist und oberhalb des Zwischenboden mindestens einen Eingang für Abfälle und einen Luftdurchgang zur Umgebung aufweist,
- einer Nachrottekammer zur Nachkompostierung der vorkompostierten Abfälle, die unten ebenfalls durch einen gelochten Zwischenboden begrenzt ist, oberhalb des Zwischenbodens einen Ausgang für nachkompostierte Abfälle und einen Luftdurchgang zur Umgebung aufweist, neben der Vorrottekammer angeordnet ist und von dieser durch eine Zwischenwand getrennt ist, die zum Befördern vorgerotteten Materials aus der Vorrottekammer in die Nachrottekammer zumindest teilweise öffenbar ist und/oder mittels einer Fördereinrichtung überwindbar ist,
- einer unterhalb der gelochten Zwischenböden von Vorrottekammer und Nachrottekammer angeordneten Filterkammer, die eine Filterschicht für durch die Zwischenböden in die Filterkammer gesickerte Flüssigkeit enthält und die einen Austritt für Flüssigkeit aufweist, und
- einer Luftschicht zwischen der Filterschicht und den Zwischenböden für vom Luftdurchgang der Nachrottekammer zum Luftdurchgang der Vorrottekammer oder umgekehrt strömende Luft.

2. Vorrichtung nach Anspruch 1, bei der die Vorrottekammer an der Außenseite mindestens einen Rohranschluß eines Eingangs für Abfälle und/oder des Luftdurchgangs hat.

3. Vorrichtung nach Anspruch 1 oder 2, bei der die Vorrottekammer den Eingang und/oder den Luftdurchgang in einer Deckwand hat.

4. Vorrichtung nach einem der Ansprüche 1 bis 3, bei der die Vorrottekammer mit einem Filterbett aus organischem Material (Erde, Torf, Baumrinde o.ä.) beschickt ist.

5. Vorrichtung nach einem der Ansprüche 1 bis 4, bei der die Vorrottekammer mit Kompostorganismen und/oder Bodentieren angeimpft ist.

6. Vorrichtung nach einem der Ansprüche 1 bis 5, bei der die Vorrottekammer eine öffenbare Tür für Inspektion o.ä. aufweist.

7. Vorrichtung nach einem der Ansprüche 1 bis 6, bei der die Vorrottekammer Zuschlagstoffe enthält.

8. Vorrichtung nach einem der Ansprüche 1 bis 7, bei der die Vorrottekammer einen Abwurf zum Streuen von Zuschlagstoffen oder organischen Abfällen auf enthaltene Abfälle aufweist.

9. Vorrichtung nach einem der Ansprüche 1 bis 8, bei der dem Eingang der Vorrottekammer für die Abfälle eine Vorrichtung zum Abtrennen von Urin zugeordnet ist, von der Urin durch mindestens eine von der Vorrottekammer abgetrennte Abwasserleitung der Filterkammer zuführbar ist.

10. Vorrichtung nach einem der Ansprüche 1 bis 9, bei der ein Toilettensitz auf der Deckwand der Vorrottekammer angebracht ist und/oder ein Toilettenstuhl an die Deckwand der Vorrottekammer angeschlossen ist.

11. Vorrichtung nach Anspruch 10, bei der im Toilettensitz und/oder im Toilettenstuhl ein entnehmbarer trichterförmiger Einsatz zur Zuführung der Abfälle in die Vorrottekammer angeordnet ist.

12. Vorrichtung nach einem der Ansprüche 1 bis 11, bei der in der Vorrottekammer und/oder in der Nachrottekammer mindestens eine Misch- und/oder Fördervorrichtung vorhanden ist.

13. Vorrichtung nach Anspruch 12, bei der mindestens eine Misch- und/oder Fördervorrichtung den Querschnitt der Vorrottekammer im wesentlichen einnimmt, um im Ruhezustand die darüber befindlichen Abfälle zurückzuhalten und bei Betätigung die Abfälle zu durchmischen, zu lockern und zum Zwischenboden hin zu befördern.

14. Vorrichtung nach Anspruch 12 oder 13, bei der mindestens eine Misch- und/oder Fördervorrichtung ein drehbares Rührwerk und/oder eine drehbare Förderschnecke und/oder ein bewegliches Gitterrost ist.

15. Vorrichtung nach einem der Ansprüche 12 bis 14, bei der mindestens eine Misch- und/oder Fördervorrichtung zwischen Vorrottekammer und Nachrottekammer angeordnet ist.

16. Vorrichtung nach Anspruch 14 oder 15, bei der eine im wesentlichen horizontal angeordnete Förderschnecke durch oder in eine Öffnung in der Wand zwischen Vorrottekammer und Nachrottekammer erstreckt ist.

17. Vorrichtung nach einem der Ansprüche 1 bis 16, bei der die Zwischenwand ein Schieber ist.

18. Vorrichtung nach einem der Ansprüche 1 bis 17, bei der der Ausgang für nachkompostierte Abfälle der Nachrottekammer als öffenbare Tür ausgeführt ist.

19. Vorrichtung nach Anspruch 18, bei der die Nachrottekammer eine Tür in einer Deckwand und/oder in einer Seitenwand hat.

20. Vorrichtung nach einem der Ansprüche 1 bis 19, bei der ein durchgehender Zwischenboden sowohl Vorrottekammer als auch Nachrottekammer unten begrenzt.

21. Vorrichtung nach einem der Ansprüche 1 bis 19, bei der die Nachrottekammer von der Vorrottekammer abkoppelbar ist.

22. Vorrichtung nach einem der Ansprüche 1 bis 21, bei der die Zwischenböden oder der durchgehende Zwischenboden entnehmbar sind/ist.

23. Vorrichtung nach einem der Ansprüche 1 bis 22, bei der die Filterschicht Baumrinde und/oder mineralischen Füllstoff enthält.

24. Vorrichtung nach einem der Ansprüche 1 bis 23, bei der die Filterkammer auf der Seite der Nachrottekammer einen Überlauf für Flüssigkeit aufweist, der zum Austritt führt.

25. Vorrichtung nach einem der Ansprüche 1 bis 24, bei der die Filterkammer an eine schwimmergesteuerte Pumpe und/oder an eine Bilgepumpe angeschlossen ist.

26. Vorrichtung nach einem der Ansprüche 1 bis 25, bei der in die Filterkammer ein Niveauwächter integriert ist, an den eine Alarmvorrichtung angeschlossen ist.

27. Vorrichtung nach einem der Ansprüche 1 bis 26, bei der ein Luftdurchgang ein einstellbares Tellerventil zum Einstellen des Zuluftstromes aufweist.

28. Vorrichtung nach einem der Ansprüche 1 bis 27, bei der ein Luftdurchgang an einen Kamin und/oder an einen Ventilator angeschlossen ist.

29. Vorrichtung nach einem der Ansprüche 1 bis 28, bei der der Oberbereich der Nachrottekammer und/oder Vorrottekammer über mindestens einen Luftkanal mit der Luftschicht zwischen Zwischenboden und Filterkammer verbunden ist.

30. Vorrichtung nach Anspruch 29, bei der der mindestens eine Luftkanal in mindestens einer Ecke der Nachrottekammer und/oder Vorrottekammer integriert ist.

31. Vorrichtung nach einem der Ansprüche 1 bis 30, bei der in Strömungsrichtung hinter einem Luftdurchgang für Zuluft ein Wärmeaustauscher zum Aufheizen der Zuluft angeordnet ist.

32. Vorrichtung nach Anspruch 31, bei der der Wärmeaustauscher in der Filterkammer angeordnet ist.

33. Vorrichtung nach einem der Ansprüche 1 bis 32, die zumindest teilweise absorbierend und/oder wärmeleitend für eine Wärmeaufnahme durch Strahlung und/oder durch Konvektion und/oder durch Leitung ausgebildet ist.

34. Vorrichtung nach einem der Ansprüche 1 bis 33, die zumindest teilweise eine Wärmeisolierung aufweist.

35. Vorrichtung nach einem der Ansprüche 1 bis 34, deren Breiten- und/oder Höhenabmessungen Werte in einem vorgegebenen Raster aufweisen.

36. Vorrichtung nach einem der Ansprüche 1 bis 35, die ein kastenförmiges Unterteil aufweist, das durch mindestens einen Zwischenboden in übereinanderliegende Abschnitte geteilt ist und in dem Bereich oberhalb des Zwischenbodens durch die Zwischenwand in nebeneinanderliegende Abschnitte geteilt ist, wobei auf einer Seite der Zwischenwand die Vorrottekammer und auf der anderen Seite der Zwischenwand ein Abschnitt der Nachrottekammer angeordnet ist und bei der auf der Seite des Unterteiles mit dem Abschnitt der Vorrottekammer mindestens ein kastenförmiges Oberteil sitzt, das einen weiteren Abschnitt der Vorrottekammer aufnimmt, wobei ein kastenförmiges Oberteil eine Deckwand mit mindestens einem Eingang für Abfälle aufweist.

37. Vorrichtung nach einem der Ansprüche 1 bis 36, bei der die Vorrottekammer innerhalb eines Gebäudes und die Nachrottekammer außerhalb eines Gebäudes angeordnet ist, wobei sich die Filterkammer sowohl innerhalb als auch außerhalb des Gebäudes erstreckt.
